(19) **Europäisches Patentamt**

**European Patent Office**

**Office européen des brevets**

(11) Veröffentlichungsnummer : **0 337 066 B1**

(12) **EUROPÄISCHE PATENTSCHRIFT**

(45) Veröffentlichungstag der Patentschrift :
29.05.91 Patentblatt 91/22

(21) Anmeldenummer : **89102300.4**

(22) Anmeldetag : **10.02.89**

(51) Int. Cl.⁵ : **E04F 13/08, E04B 2/94**

(54) **Zuglasche.**

(30) Priorität : **23.03.88 DE 3809728**

(43) Veröffentlichungstag der Anmeldung :
**18.10.89 Patentblatt 89/42**

(45) Bekanntmachung des Hinweises auf die
Patenterteilung :
**29.05.91 Patentblatt 91/22**

(84) Benannte Vertragsstaaten :
**AT BE CH DE FR GB LI LU NL SE**

(56) Entgegenhaltungen :
**EP-A- 0 237 998**
**AT-A- 370 471**

(56) Entgegenhaltungen :
**DE-A- 3 212 991**
**DE-B- 1 683 022**
**FR-A- 2 095 793**
**FR-A- 2 167 112**
**US-A- 2 578 639**

(73) Patentinhaber : **DETEC Fertigung GmbH**
**Breslauer Strasse 3**
**W-6080 Gross-Gerau (DE)**

(72) Erfinder : **Ernst, Peter, Dr.-Ing.**
**Lindenstrasse 7**
**W-6234 Hattersheim (DE)**

(74) Vertreter : **Katscher, Helmut, Dipl.-Ing.**
**Bismarckstrasse 29**
**W-6100 Darmstadt (DE)**

## Beschreibung

Die Erfindung betrifft eine Zuglasche zur Verbindung mit einem mit einer Mutter versehenen Gewindestab, insbesondere als Ankeroberteil für einen Fassadenplattenanker, wobei die aus Blech bestehende Zuglasche ein Fenster aufweist, dessen unterer, aus der die Mittelachse des Gewindestabs enthaltenden Ebene der Zuglasche herausgewölbter Rand eine Auflagefläche für die Mutter bzw. eine darunterliegende Scheibe bildet.

Derartige Zuglaschen dienen zur Einleitung von Zugkräften in Zugstäbe, die zumindest an ihrem Ende ein Gewinde aufweisen. Die Zuglasche bildet dabei am Ende des Gewindestabs eine flache Öse, die beispielsweise zur Verbindung mit einer Fläche eines anderen Bauteils mittels einer Schraube oder einem ähnlichen Element dient.

Allen Anwendungsfällen derartiger Zuglaschen ist gemeinsam, daß die Krafteinleitung in den Gewindestab möglichst frei von Biegemomenten erfolgen soll, da anderenfalls die Belastbarkeit der Verbindung wesentlich herabgesetzt wird.

Ein typischer Anwendungsfall für eine derartige Zuglasche sind Fassadenplattenanker, die dazu dienen, Fassadenplatten in geringem Abstand vor Außenwänden von Bauwerken abzuhängen. In diesen Fassadenplattenankern bildet die Zuglasche das Ankeroberteil, das mittels einer Dübelschraube an der die Fassadenplatte tragenden Außenwand befestigt wird.

Bei einem solchen bekannten Fassadenplattenanker (EP-A-237 998), der auch in der Praxis in weitem Umfang Eingang gefunden hat, besteht die das Ankeroberteil bildende Zuglasche aus einem doppellagig aufeinander gefalteten Blechteil. Die Faltkante liegt am oberen Rand der Zuglasche. Der untere Rand des in beiden Blechlagen ausgestanzten Fensters wird hierbei von zwei Blechstegen gebildet, die an ihren beiden Seitenrändern aufeinanderliegen und miteinander beispielsweise durch Nieten verbunden sind. Jeweils die mittleren Abschnitte der beiden Blechstege sind in entgegengesetzten Richtungen nach außen zu einer angenähert halbzylindrischen Schelle gewölbt, die zusammen eine Hülse bilden, durch die der Gewindestab gesteckt ist. Jeweils der obere Rand der beiden Blechstege bildet die Auflagefläche für die unter der Mutter liegende Scheibe. Diese Auflagefläche erstreckt sich somit weitgehend symmetrisch beiderseits der die Mittelachse des Gewindestabs enthaltenden Ebene der Zuglasche, wobei diese Ebene bei dem bekannten Fassadenoberteil zugleich die Teilungsebene der beiden Blechlagen ist.

Auf diese Weise wird zwar eine zentrische und somit momentenfreie Zugkrafteinleitung aus der Zuglasche in den Gewindestab erreicht ; die Herstellung der Zuglasche ist wegen der erforderlichen Doppellagigkeit jedoch verhältnismäßig aufwendig, insbesondere weil das Fenster in beiden Blechlagen ausgestanzt werden muß. Wegen der im unteren Abschnitt der Zuglasche vorzunehmenden Verformungen lassen sich die Löcher für die Nietverbindung nicht vorher herstellen, sondern müssen nach dem Verformungsvorgang hergestellt werden, was mit zusätzlichem Arbeitsaufwand verbunden ist.

Hinzu kommt noch, daß Fertigungsungenauigkeiten vermieden werden müssen, die dazu führen würden, daß die von den beiden Blechlagen gebildeten beiden Hälften der Auflagefläche gegeneinander versetzt sind, weil dies wiederum eine außermittige und somit ein Biegemoment verursachende Krafteinleitung zur Folge hätte.

Aufgabe der Erfindung ist es daher, eine Zuglasche der eingangs genannten Gattung so auszubilden, daß sie in einfacherer Weise als bisher hergestellt werden kann und daß sie zur Einleitung auch sehr hoher Zugkräfte in den Gewindestab geeignet ist.

Diese Aufgabe wird erfindungsgemäß dadurch gelöst, daß die Zuglasche einlagig ausgebildet ist, daß ein den unteren Rand des Fensters bildender oberer Blechsteg in seinem mittleren Abschnitt nach der einen Richtung angenähert in Form einer halbzylindrischen Schale aus der Ebene der Zuglasche herausgewölbt ist, daß die beiden im Bereich der Auflagefläche liegenden Seitenabschnitte des oberen Blechstegs in der entgegengesetzten Richtung aus der Ebene der Zuglasche herausgewölbt sind, und daß eine Halteschelle für den Gewindestab entgegengesetzt zu dem mittleren Abschnitt des oberen Blechstegs aus der Ebene der Zuglasche herausgewölbt ist.

Durch die an dem einlagigen oberen Blechsteg in beiden Richtungen aus der Ebene der Zuglasche herausgewölbten Abschnitte wird eine weitestgehend zentrische und damit momentenfreie Zugkrafteinleitung aus der Zuglasche in die Mutter und aus dieser in den Gewindestab erreicht, ohne daß hierfür eine doppellagige Ausführung des Blechstegs erforderlich wäre. Die einlagige Herstellung der Zuglasche ist gegenüber einer gefalteten, doppellagigen Ausführung wesentlich vereinfacht. Es hat sich außerdem gezeigt, daß gegenüber der doppellagigen Ausführung vergleichsweise sehr hohe Zugkräfte übertragen werden können, ohne daß es zu einer unzulässigen Verformung oder einem Bruch im Bereich des Blechstegs kommt.

Vorzugsweise sind die beiden Seitenabschnitte des Blechstegs um etwa 20-40% des Betrags der Wölbung des mittleren Abschnitts aus der Ebene der Zuglasche herausgewölbt. Die erforderliche Wölbung des mittleren Abschnitts ergibt sich durch den Durchmesser des Gewindestabs, weil dieser mittlere Abschnitt den Gewindestab zur Hälfte umgreift.

Die entgegengesetzt zu dem mittleren Abschnitt des oberen Blechstegs gewölbte Halteschelle dient in erster Linie dazu, den Gewindestab in seiner Lage in der Zuglasche zu halten. Gemäß einer besonders bevorzugten Ausführungsform der Erfindung ist vorgesehen, daß die Halteschelle von einem jeweils entgegengesetzt zum oberen Blechsteg gewölbten Blechsteg gebildet wird. Damit wird erreicht, daß auch die Halteschelle einstückig mit der Zuglasche ausgeführt ist und ohne zusätzlichen Arbeitsgang hergestellt werden kann.

Besonders vorteilhaft ist es, wenn sich der obere Blechsteg an dem die Halteschelle bildenden Blechsteg in axialer Richtung abstützt. Dadurch wird die Tragfähigkeit des oberen Blechstegs noch erheblich vergrößert.

In gleicher Weise kann unterhalb des mittleren, die Halteschelle bildenden Blechstegs ein unterer Blechsteg angeordnet und jeweils entgegengesetzt zu diesem gewölbt werden. Vorzugsweise gleicht die Querschnittsform dieses unteren Blechstegs wieder der des oberen Blechstegs. Auch der mittlere Blechsteg kann sich wieder an dem unteren Blechsteg in axialer Richtung abstützen. Die so in axialer Richtung des Gewindestabs hintereinanderliegenden, sich aneinander abstützenden, jeweils aufeinanderfolgend in entgegengesetzter Richtung gewölbten Blechstege bilden zusammen eine formsteife, in axialer Richtung hochbelastbare Brücke zur Aufnahme der aus dem Gewindestab eingeleiteten Zugkräfte, wobei der Gewindestab zwischen den wechselseitig entgegengesetzt gewölbten, jeweils mittleren Abschnitten der Blechstege wie in einer Hülse aufgenommen und geführt ist.

Nachfolgend wird ein Ausführungsbeispiel der Erfindung näher erläutert, das in der Zeichnung dargestellt ist. Es zeigt :

Fig. 1 eine Vorderansicht einer Zuglasche, die ein Ankeroberteil eines Fassadenplattenankers bildet,

Fig. 2 eine Seitenansicht des Fassadenplattenankers, dessen Ankeroberteil in Fig. 1 gezeigt ist, und

Fig. 3 einen Schnitt längs der Linie III-III in Fig. 2.

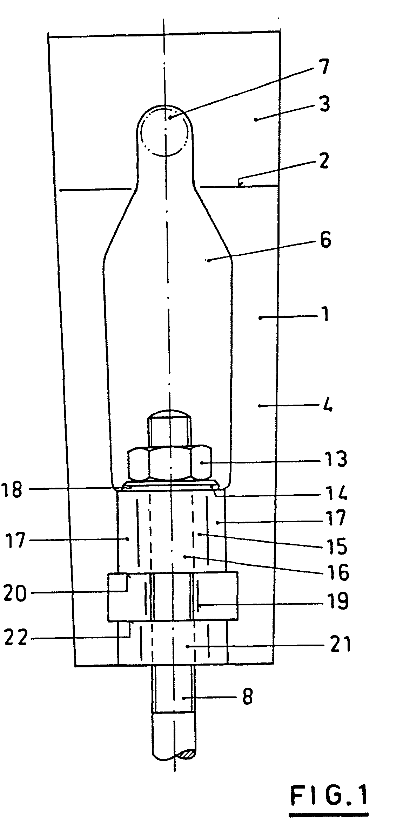

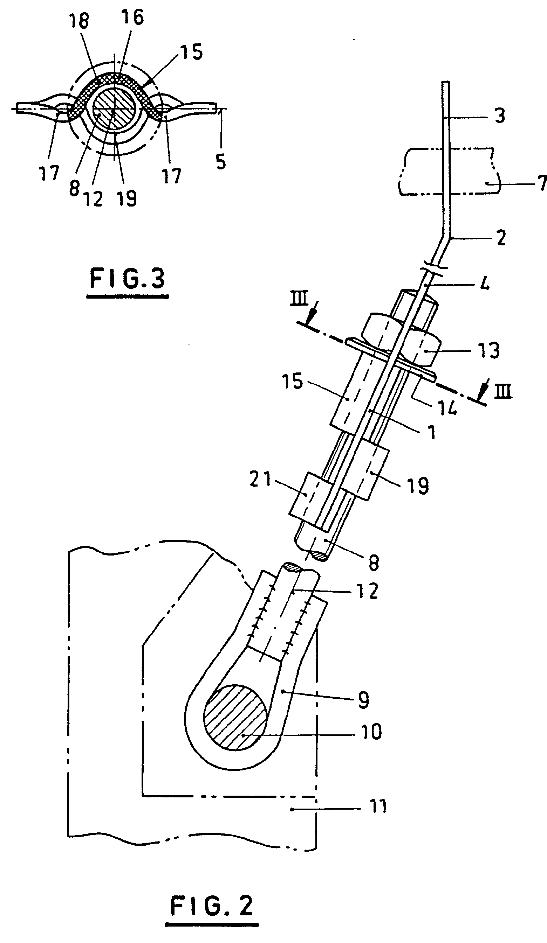

Das Ankeroberteil des in der Zeichnung dargestellten Fassadenplattenankers ist eine Zuglasche 1, die einlagig aus Blech gebogen und gestanzt ist. Die Zuglasche 1 weist einen oberen, an einer Biegekante 2 leicht abgewinkelten Abschnitt 3 auf, der bei dem dargestellten Ausführungsbeispiel zur Befestigung an einer Gebäudeaußenfläche dient. Schräg nach unten von diesem oberen Abschnitt 3 erstreckt sich der Hauptabschnitt 4 der Zuglasche 1, der größtenteils flach in einer Ebene 5 liegt (Fig. 3) und aus dem ein längliches Fenster 6 (Fig. 1) ausgestanzt ist. Das Fenster 6 erstreckt sich bis in den oberen Abschnitt 3 und bildet dort eine Ausnehmung für eine den Fassadenplattenanker tragende Dübelschraube 7 od. dgl..

Ein Gewindestab 8 bildet eine Zugstange, die an ihrem unteren Ende mit einer Öse 9 verbunden ist. Die Öse 9 greift um einen Querstab 10 in einer Ausnehmung einer Fassadenplatte 11 (Fig. 2).

Der Gewindestab 8, dessen Mittelachse 12 in der Ebene 5 der Zuglasche 1 liegt, wie man aus den Fig. 2 und 3 erkennt, ragt mit seinem Ende in das Fenster 6 und trägt dort eine Mutter 13, unter der eine Scheibe 14 liegt. Die Mutter 13 stützt sich über die Scheibe 14 am unteren Rand des Fensters 6 ab. Dieser untere Rand wird von einem oberen Blechsteg 15 gebildet, der die beiden Seitenteile der Zuglasche 1 miteinander verbindet. Dieser obere Blechsteg 15 ist in seinem mittleren Abschnitt 16 (Fig. 3) angenähert in Form einer halbzylindrischen Schale nach der einen Richtung aus der Ebene 5 der Zuglasche 1 herausgewölbt. Beiderseits davon liegen Seitenabschnitte 17 des oberen Blechstegs 15, die ebenfalls aus der Ebene 5 herausgewölbt sind, jedoch in entgegengesetzter Richtung zum mittleren Abschnitt 16. Auch ist die Wölbung dieser Seitenabschnitte 17 geringer und beträgt nur etwa 20-40% des Betrags der Wölbung des mittleren Abschnitts 16.

In Fig. 3 ist der äußere Durchmesser der Scheibe 14 als strichpunktierter Kreis eingetragen. Man erkennt, daß die innerhalb dieses Kreises liegende, kreuzschraffierte Fläche die Auflagefläche 18 für die Scheibe 14 bildet und daß diese Auflagefläche 18 beiderseits der Ebene 5 liegende Abschnitte aufweist.

Unterhalb des oberen Blechsteges 15 befindet sich ein mittlerer Blechsteg 19, der von dem oberen Blechsteg 15 durch einen querverlaufenden Schnitt 20 getrennt ist. Der mittlere Blechsteg 19 ist in gleicher Weise wie der obere Blechsteg 15 gewölbt, jedoch in entgegengesetzter Richtung. Der mittlere Blechsteg 19 bildet zum einen eine Halteschelle für den Gewindestab 8 in der Zuglasche 1 ; zum anderen stützt der mittlere Blechsteg 19 aber an den beiden Berührungsstellen im Bereich des Schnittes 20 in axialer Richtung auch den oberen Blechsteg 15 ab, so daß dessen Tragfähigkeit zur Aufnahme der Zugkräfte aus dem Gewindestab 8 vergrößert wird.

Unterhalb des mittleren Blechstegs 19 ist ein unterer Blechsteg 21 angeordnet, der wiederum entgegengesetzt zu dem mittleren Blechsteg 20 und somit in gleicher Weise wie der obere Blechsteg 15 gewölbt ist. Im Bereich eines querverlaufenden Schnittes 22, der die Blechstege 19 und 21 voneinander trennt, stützen sich diese gegenseitig ab. Wenn vorangehend beschrieben wurde, daß einer der Blechstege entgegengesetzt zu dem anderen gewölbt ist, so soll damit jeweils zum Ausdruck gebracht werden, daß jeder dieser Blechstege 15, 19 bzw. 21 einen in der einen Richtung aus der Ebene 5 herausgewölbten Mittelabschnitt und beiderseits davon zwei in entgegengesetzter Richtung gewölbte Seitenabschnitte aufweist. Wegen dieser gleichen Verformung der Blechstege 15, 19 und 21 ist deren gestreckte Länge jeweils gleich, so daß beim Herstellen der Blechstege 15, 19 und 21 keine Dehnungen oder Stauchungen in einzelnen der Blechstege erforderlich sind.

Eine besonders günstige Traglastverteilung auf die einzelnen Blechstege 15, 19 und 21 ergibt sich, wenn der obere Blechsteg 15 breiter als die Blechstege 19 bzw. 21 ausgeführt wird. Vorzugsweise liegt die Breite des oberen Blechstegs 15 zwischen der eineinhalbfachen und der doppelten Breite des mittleren Blechstegs 19.

## Ansprüche

1. Zuglasche zur Verbindung mit einem mit einer Mutter versehenen Gewindestab (8), insbesondere als Ankeroberteil für einen Fassadenplattenanker, wobei die aus Blech bestehende Zuglasche (1) ein Fenster (6) aufweist, dessen unterer, aus der die Mittelachse des Gewindestabs (8) enthaltenden Ebene der Zuglasche (1) herausgewölbter Rand eine Auflagefläche für die Mutter (13) bzw. eine darunterliegende Scheibe (14) bildet, dadurch gekennzeichnet, daß die Zuglasche (1) einlagig ausgebildet ist, daß ein den unteren Rand des Fensters (6) bildender oberer Blechsteg (15) in seinem mittleren Abschnitt (16) nach der einen Richtung angenähert in Form einer halbzylindrischen Schale aus der Ebene (5) der Zuglasche (1) herausgewölbt ist, daß die beiden im Bereich der Auflagefläche (18) liegenden Seitenabschnitte (17) des oberen Blechstegs (15) in der entgegengesetzten Richtung aus der Ebene (5) der Zuglasche (1) herausgewölbt sind, und daß eine Halteschelle (19) für den Gewindestab (8) entgegengesetzt zu dem mittleren Abschnitt (16) des oberen Blechstegs (15) aus der Ebene (5) der Zuglasche (1) herausgewölbt ist.

2. Zuglasche nach Anspruch 1, dadurch gekennzeichnet, daß die beiden Seitenabschnitte (17) des oberen Blechstegs (15) um etwa 20-40% des Betrags der Wölbung des mittleren Abschnitts (16) aus der Ebene (5) der Zuglasche (1) herausgewölbt sind.

3. Zuglasche nach Anspruch 1, dadurch gekennzeichnet, daß die Halteschelle von einem jeweils entgegengesetzt zum oberen Blechsteg (15) gewölbten Blechsteg (19) gebildet wird.

4. Zuglasche nach Anspruch 3, dadurch gekennzeichnet, daß sich der obere Blechsteg (15) an dem die Halteschelle (19) bildenden Blechsteg (19) in axialer Richtung abstützt.

5. Zuglasche nach Anspruch 3, dadurch gekennzeichnet, daß unterhalb des die Halteschelle (19) bildenden mittleren Blechstegs (19) ein unterer Blechsteg (21) angeordnet und jeweils entgegengesetzt zu diesem gewölbt ist.

6. Zuglasche nach Anspruch 5, dadurch gekennzeichnet, daß sich der mittlere Blechsteg (19) an dem unteren Blechsteg (21) in axialer Richtung abstützt.

## Claims

1. Anchoring strap for connection to a threaded rod (8) provided with a nut, especially as an upper anchoring section for a cladding panel anchoring, the anchoring strap (1) consisting of sheet metal having a window (6), the lower edge of which, arched outwards from the plane of the anchoring strap (1) which contains the central axis of the threaded rod (8), forms a supporting surface for the nut (13) or a washer (14) lying under it, characterised in that the anchoring strap (1) is constructed in one layer, that an upper sheet-metal web (15) forming the lower edge of the window (6) is arched outwards in its central section (16) towards one direction approximately in the shape of a a semi-cylindrical shell from the plane (5) of the anchoring strap (1), that the two side sections (17) of the upper sheet-metal web (15) in the zone of the supporting surface (18) are arched outwards in the opposite direction from the plane (5) of the anchoring strap (1), and that a retaining clip (19) for the threaded rod (8) is arched outwards in an opposite direction to the central section (16) of the upper sheet-metal web (15) from the plane (5) of the anchoring strap (1).

2. Anchoring strap according to Claim 1, characterised in that the two side sections (17) of the upper sheet-metal web (15) are arched outwards by about 20-40% of the amount of the arching of the central section (16) from the plane (5) of the anchoring strap (1).

3. Anchoring strap according to Claim 1, characterised in that the retaining clip is formed from a sheet-metal web (19), arched in each case in an opposite direction to the upper sheet-metal web (15).

4. Anchoring strap according to Claim 3, characterised in that the upper sheet-metal web (15) is supported on the sheet-metal web (19) forming the retaining clip (19) in an axial direction.

5. Anchoring strap according to Claim 3, characterised in that underneath the central sheetmetal web (19) forming the retaining clip (19), a lower sheet-metal web (21) is arranged and in each case arched in an opposite direction to the latter.

6. Anchoring strap according to Claim 5, characterised in that the central sheet-metal web (19) is supported on the lower sheet-metal web (21) in an axial direction.

## Revendications

1. Patte d'ancrage à assembler à une tige filetée (8) pourvue d'un écrou et, en particulier, devant servir de pièce supérieure d'ancre pour une ancre de plaque de façade, dans laquelle la patte d'ancrage (1) réalisée en tôle présente une fenêtre (6) dont le bord inférieur rabattu hors du plan de la patte d'ancrage (1) contenant l'axe de la tige filetée (8) constitue une surface d'appui pour l'écrou (13) ou pour une rondelle (14) située sous celui-ci, caractérisée en ce que la patte d'ancrage (1) est réalisée en une couche, qu'une barrette de tôle supérieure (15) formant le bord inférieur de la fenêtre (6) est rabattue hors du plan (5) de la patte d'ancrage (1) dans sa section centrale (16) dans une direction suivant à peu près la forme d'une coquille semi-cylindrique, que les deux sections latérales (17) de la barrette de tôle supérieure (15) situées dans la zone de la surface d'appui (18) sont rabattues hors du plan (5) de la patte d'ancrage (1) dans la direction opposée et qu'une coquille d'arrêt (19) pour la tige filetée (8) est rabattue hors du plan (5) de la patte d'ancrage (1) dans le sens opposé à la section centrale (16) de la barrette de tôle supérieure (15).

2. Patte d'ancrage selon la revendication 1, caractérisée en ce que les deux sections latérales (17) de la barrette de tôle supérieure (15) sont rabattues hors du plan (5) de la patte d'ancrage (1) à raison d'environ 20-40% du degré de cintrage de la section centrale (16).

3. Patte d'ancrage selon la revendication 1, caractérisée en ce que la coquille d'arrêt est constituée par une barrette de tôle (19) cintrée dans le sens opposé à la barrette de tôle supérieure (15).

4. Patte d'ancrage selon la revendication 3, caractérisée en ce que la barrette de tôle supérieure (15) prend appui, en direction axiale, sur la barrette de tôle (19) constituant la coquille d'arrêt (19).

5. Patte d'arrêt selon la revendication 3, caractérisée en ce qu'une barrette de tôle inférieure (21) est disposée sous la barrette de tôle centrale (19) constituant la coquille d'arrêt (19) et est cintrée dans le sens opposé à celle-ci.

6. Patte d'ancrage selon la revendication 5, caractérisée en ce que la barrette de tôle centrale (19) prend appui, en direction axiale, sur la barrette de tôle inférieure (21).

7

3

2

6

1

4

13

18

14

17

17

15

16

20

19

22

21

8

**FIG.1**

## FIG.3

## FIG. 2